# EUROPÄISCHE PATENTANMELDUNG

(11) **EP 2 629 134 A2**
(43) Veröffentlichungstag der Anmeldung: **21.08.2013**
(21) Anmeldenummer: 13151615.5
(22) Anmeldetag: 17.01.2013
(51) Int. Cl.: G02B 23/10, G02B 23/18

(54) **Optisches Beobachtungsgerät zur Zielerfassung und Zielführung**

(30) Priorität: 16.02.2012 DE 102012003124
(71) Anmelder: Leica Camera AG, 35606 Solms (DE)
(72) Erfinder: Denk, Robert, 35619 Braunfels (DE)
(74) Vertreter: Stamer, Jan

(57) **Zusammenfassung**

Ein Optisches Beobachtungsgerät zur Zielerfassung und Zielführung mit zumindest einem dem zu beobachtenden Objekt zuzuwendenden Objektiv und zumindest einem dem Auge des Betrachters zuzuwendenden Okular in einem Gehäuse, wobei das Gehäuse zumindest ein Bildumkehrsystem, Mittel zur Entfernungsmessung, zur Orts-/ Positionsbestimmung, zur Bestimmung der Himmelsrichtung und zur Anzeige von Daten aufweist, zeichnet sich dadurch aus, dass ein integriertes Zielerfassungsmodul mit optoelektronischem Entfernungsmesser, einer GPS-Positionsbestimmung, einer elektronischen Kompass-Richtungsbestimmung und einer Microcomputereinheit zur Berechnung und Speicherung von Entfernung und Ortskoordinaten eines anvisierten Zielpunktes, ein integriertes Zielführungsmodul mit außen am Gehäuse angeordnetem Display und am Gehäuse angeordnete Betätigungsorgane zur Aktivierung von Funktionen des Zielerfassungs- und Zielführungsmoduls vorgesehen sind.

## Beschreibung

Die Erfindung betrifft ein optisches Beobachtungsgerät zur Zielerfassung und Zielführung gemäß dem Oberbegriff des Patentanspruchs 1 und ein Verfahren zur Zielerfassung und Zielführung gemäß Patentanspruch 6.

Es ist eine Vielzahl von optischen Beobachtungsgeräten, wie z.B. monokulare und binokulare Ferngläser, Fernrohre aber auch Zielfernrohre mit integrierter Entfernungsmessung bekannt. Mit diesen Geräten ist bei gleichzeitiger Beobachtung eines Objektes eine genaue Entfernungsmessung zu demselben möglich. Sogenannte Laserrangefinder Ferngläser bieten die Möglichkeit der binokularen Beobachtung, bei gleichzeitiger Darstellung eines Zielpunktes und einer gemessenen Entfernung durch Einspiegelung eines Displays im Beobachtungsstrahlengang. Üblicherweise wird dabei ein Objektiv des Fernglases als Empfangsobjektiv für den Laserentfernungsmesser genutzt, um eine bestmögliche Übereinstimmung des tatsächlich angemessenen Zielobjektes mit dem eingespiegelten und im Objektraum überlagerten Zielpunkt zu gewährleisten. Ein weiteres Objektiv oder eine separat getrennte Senderöhre sind notwendig, um den vom Lasersender erzeugten Messstrahl in den anzumessenden Objektraum zu projizieren.

Aus der DE 37 04 848 C2 ist beispielsweise ein solches binokulares Beobachtungsgerät, nämlich ein binokularer Feldstecher bekannt, bei dem die Entfernungsmessung unter Verwendung bereits vorhandener optischer Bauteile erfolgt. In das Gerät integriert sind daher die traditionelle Feldstecher- bzw. Fernrohrfunktion, die eine direkte Beobachtung eines Objektes erlaubt, ferner die in den Beobachtungsstrahlengang integrierte Entfernungsmessung, sowie eine im Gerät integrierte Richtungsanzeige, deren Ergebnis zusätzlich in den Beobachtungsstrahlengang projiziert wird.

Ein Objektiv des Fernglases wird für die Laserstrahlprojektion genutzt, während das zweite Objektiv die Empfangsoptik des Laserentfernungsmesser Empfängers darstellt. Beide Strahlengänge sind in fester Zuordnung in einem Gehäuse ohne Knickbrückenfunktion zur Augenweiteneinstellung angeordnet. Die Ein- und Ausspiegelung der Laserstrahlen erfolgt ebenso wie die Einspiegelung des Displays an optischen Teilerschichten der zwischen Objektiv und Okular angeordneten Prismen des linken und rechten Bildumkehrsystems. Messwerte sind durch den Benutzer folglich nur solange erfassbar, solange das Fernglas in Beobachtungsbenutzungshaltung an den Augen angesetzt ist und eine Messung durchgeführt wird. Das Auffinden eines zuvor beobachteten Zielpunktes ist mit diesem Gerät nicht möglich, der Benutzer muss sich Messdaten und Ergebnisse merken, um sie später verwenden zu können.

Aus der DE 10 2006 040 082 A1 sind ein Verfahren zur Bestimmung eines unbekannten geographischen Zielortes und ein Fernglas mit einem Sichtfeld bekannt, mit dem ein Objekt anpeilbar und betrachtbar ist. Mithilfe einer GPS Messeinrichtung und eines Messgerätes zur Bestimmung der Peilung werden die Koordinaten eines im Sichtfeld des Fernglases befindlichen Objektes, mit Hilfe einer integrierten Anzeige dargestellt.

Aus der JP 2002-236259 A ist ein System bekannt, mit dem in einem Binokular die Positionsdaten eines Objektes bereitgestellt werden. Das Binokular kann unter Verwendung dieser Daten auf die Erfassung des Objektes im Sichtfeld ausgerichtet werden.

Aus US 2006/0077375 A1 ist ein Laserentfernungsmesser bekannt, mit dem unter Berücksichtigung einer zu einem Ziel ermittelten Entfernung unter Berücksichtigung einer gemessenen Neigung zum Ziel eine zweite Entfernung ermittelt und intern zur Anzeige gebracht wird. Zur Aktivierung der Funktionen ist auf dem Gehäuse des Gerätes ein Schalter angeordnet.

Aus der DE 692 21 700 T2 ist optisches Beobachtungsgerät bekannt, bei dem einem internem ersten Beobachtungsbild ein zweites, beispielsweise elektronisch erzeugtes Bild mit symbolischen Elementen überlagert wird. Zur Aktivierung verschiedener Funktionen weist das Gerät außen angeordnete Betätigungselemente auf.

Der Erfindung liegt daher die Aufgabe zugrunde, den Stand der Technik zu verbessern, die Handhabung zu erleichtern und insbesondere die Eignung für den jagdlichen Bereich durch eine Zielführungsfunktion zu verbessern.

Ein weiterer Aspekt der Erfindung ist die Reduzierung von Herstellkosten, bei gleichzeitiger Erhöhung des Nutzen für den Anwender.

Bei einem Beobachtungsgerät der eingangs genannten Art wird diese Aufgabe erfindungsgemäß durch die kennzeichnenden Merkmale des Anspruchs 1 und durch ein Verfahren mit den Merkmalen des Anspruchs 6 gelöst. Vorteilhafte Weiterbildungen sind Gegenstand der Unteransprüche.

Der Erfindung liegt die Erkenntnis zugrunde, dass durch modulare Bauweise unter Ausnutzung der bei bestehenden optischen Beobachtungsgeräten vorhandenen Bauteilen und Bauteilgruppen ohne signifikante Erhöhung der Herstellkosten weitere Funktionen von hohem Nutzen für den Anwender realisierbar sind. Die Erweiterung vorhandener Geräte, die bereits unter schwierigen Bauraumbedingungen platzsparend entwickelt wurden, ist jedoch nicht ohne weiteres möglich.

Ein weiterer Aspekt der Erfindung ist es Messdaten, die ansonsten nur in der üblichen Benutzungshaltung, nämlich am Auge des Beobachters im internen Display zur Verfügung stehen, für eine weitere Nutzung, beispielsweise eine im Anschluss an die Zielpunktmessung notwendige Zielführung, nutzbar zu machen. Mit einem an den Augen angesetzten Beobachtungsgerät kann sich der Benutzer nicht ohne Gefahr über Hindernisse zu fallen auf ein Ziel zubewegen.

Kern der Erfindung ist es, bei den im Oberbegriff genannten optischen Beobachtungsgeräten, insbesondere bei monokularen und binokularen Ferngläsern mit integrierter Laserentfernungsmessung die internen Bauteile in Modulen zu gruppieren und zusätzliche Funktionen in einfach zu bedienender Weise zur Verfügung zu stellen.

Erfindungsgemäß weist das optische Beobachtungsgerät, insbesondere ein binokulares Laserrangefinder-Fernglas oder ein monokularer Rangefinder daher ein integriertes Zielerfassungsmodul und ein integriertes Zielführungsmodul mit außen am Gehäuse angeordneten Betätigungsorganen auf.

Als Betätigungsorgane sind vorzugsweise Schalter, insbesondere Druckschalter oder Taster zur Aktivierung von Funktionen des Zielerfassungs- und Zielführungsmoduls vorgesehen.

Das Zielerfassungsmodul weist unter anderem einen optoelektronischen Entfernungsmesser und ein durch das Okular beobachtbares Display zur Darstellung einer Zielmarke und einer gemessenen Zielentfernung auf. Ebenfalls integriert ist eine GPS-Positionsbestimmung mit der die aktuelle Position des Beobachters, bzw. des Gerätes ermittelbar ist, während die Ausrichtung des Gerätes, sprich die Beobachtungsrichtung mit einem elektronischen Kompass ermittelt wird. Zusätzlich kann der Neigungswinkel des Geräts in Beobachtungsrichtung mit einem Neigungssensor erfasst werden. Die auf diese Weise gemessenen und erzeugten Entfernungs-, Positions- und Richtungsdaten werden in einer Microcomputereinheit zur Speicherung der gemessenen Zielentfernung und zur Berechnung der Ortskoordinaten eines anvisierten Zielpunktes genutzt. Ein Luftdruckerfassungssensor kann zur Höhenbestimmung und ergänzendem Abgleich mit GPS-Daten zu einer verbesserten Genauigkeit der Standortbestimmung genutzt werden. Der zuvor ermittelte Neigungswinkel kann zusätzlich zur Verbesserung der Zielbestimmung herangezogen werden. Diese Funktionen sind insbesondere im Gebirge, bei dem sich der Zielpunkt oftmals über oder unter der augenblicklichen Position befindet, von Vorteil.

Das integrierte Zielführungsmodul weist ein außen am Gehäuse angeordnetes Display zur Darstellung eines aus den aktuell ermittelten GPS-Positionskoordinaten des Beobachtungsgerätes und den gespeicherten Ortskoordinaten des Zielpunktes berechneten Zielrichtungsvektor und einer resultierenden aktuellen Zielentfernung auf.

In besonders vorteilhafter Weise ist als Betätigungsorgan mindestens ein außen am Gehäuse angeordneter Druckschalter vorgesehen mit dem die Microcomputereinheit durch eine erste Schalterbetätigung aktivierbar ist und anschließend die Entfernungs-, Richtungs-, Neigungsmessung, Temperatur und z.B. Luftdruckmessung durchgeführt wird. Zusätzlich oder alternativ dazu kann im Okularbereich ein Näherungssensor angeordnet sein, der beim Heranführen des Beobachtungsgeräts an die Augen die Microcomputereinheit zur Entfernungsmessung aktiviert. Eine vergleichbare Alternative besteht darin, einen integrierten Neigungssensor vorzusehen und zur Erzeugung eines Schaltersignales zu nutzen. Das Schaltersignal kann z.B. durch Detektion einer Lageveränderung von einer überwiegend senkrechten Haltung des Geräts in die am Auge des Benutzers angesetzte nahezu waagerechte Benutzungshaltung erzeugt werden. Die GPS-Positionsbestimmung kann dauerhaft während der Zielerfassung aktiviert sein, um einerseits die Positionsdaten im internen Display zur Anzeige zu bringen und andererseits diese sofort zur weiteren Berechnung zur Verfügung zu haben. Zu Energiesparzwecken kann die GPS-Positionsbestimmung alternativ auch erst durch Tastendruck auf einen weiteren Schalter aktivierbar sein. In der am Auge anliegenden Benutzungshaltung wird nach erfolgreicher Zielerfassung durch wiederholte, beispielsweise lange Betätigung des Schalters die Berechnung und automatische Speicherung der Entfernung und der Ortskoordinaten des Zielpunktes aktiviert, wobei auch Richtung, Neigung und Luftdruck gespeichert werden können. Zusätzlich kann diese Funktion an eine überwiegend unveränderte horizontale Haltung des Beobachtungsgeräts gekoppelt werden. Die Aktivierung der Laserentfernungsmessung und ggf. auch der GPS-Positionsbestimmung kann auch abhängig von einer Zustandsveränderung des Näherungssensors (Gerät wird vom Auge weggeführt) oder des Neigungssensors (Gerät wird von waagrecht nach senkrecht bewegt) unterbunden werden. Auf diese Weise können Fehlmessungen verhindert und elektrische Leistung eingespart werden.

Um die Benutzung des Geräts auch in der Dunkelheit zu gewährleisten, ist das externe Display des Zielführungsmoduls mit einer Beleuchtung versehen. Da ein beleuchtetes Display jedoch insbesondere bei Dunkelheit weithin sichtbar ist und beispielsweise im jagdlichen Bereich das zu beobachtende Wild irritiert, hat es sich als vorteilhaft erwiesen, das Zielführungsmodul und dessen Display während der Zielerfassung auch aus Energiesparzwecken zu deaktivieren und nur zur Zielführung zu beleuchten.

In vorteilhafter Weise wird bei einem erfindungsgemäßen optischen Beobachtungsgerät das Zielführungsmodul und dessen Display erst durch Betätigung eines weiteren außen am Gehäuse angeordneten Druckschalters aktiviert. Auf diese Weise ist sichergestellt, dass das Display nicht unbeabsichtigt eingeschaltet wird und die Beleuchtung den Benutzer stört. Alternativ kann unter Inkaufnahme der möglicherweise unbeabsichtigten Beleuchtung des Displays zur Erhöhung des Komforts für den Benutzer, nach Abschluss der Zielerfassung das Zielführungsmodul automatisch durch die Detektion einer Veränderung des Zustandes des Näherungssensors aktiviert werden. Auf diese Weise ist es möglich, dass der Benutzer sobald er das Beobachtungsgerät vom Auge abnimmt und beispielsweise um das Display zu studieren vor seine Brust hält, sofort über die nötigen Informationen zur Auffindung des Zielpunktes verfügt. Sinnvollerweise kann das Display bei einer mit dem Neigungssensor detektierten Neigungsänderung, die eine Beobachtung des Displays unmöglich macht, z.B. in dem Fall, wenn sich der Benutzer das Fernglas vor die Brust hängt, vorübergehend deaktiviert werden. Auch bei einer monokularen Ausführung des erfindungsgemäßen Beobachtungsgeräts ist die Aktivierung des Displays in Abhängigkeit von der Lage, bzw. Neigungsänderung sinnvoll. Insbesondere kompakte Geräteausführungen sind oftmals schlank ausgebildet und weisen auf der in Benutzungshaltung oben liegenden Fläche nur Platz für Bedienelemente auf. Bei derartigen monokularen Beobachtungsgeräten ist das Display auf einer seitlichen Fläche angeordnet. Das Gerät muss, damit das Display von oben einsehbar ist, um seine optische Achse um ca. 90 Grad geschwenkt werden. Diese Schwenkbewegung kann vorzugsweise mit einem Neigungssensor detektiert und das Display in Abhängigkeit von einer im Wesentlichen horizontalen/waagerechten Ausrichtung aktiviert werden. Bei einer anschließenden erneuten, für die Zielführung geeigneten, vorzugsweise horizontalen Ausrichtung des Gerätes, bei der das Display durch den Benutzer von oben einsehbar ist, wird das Display wieder aktiviert. Mit Hilfe eins Umlichtsensors kann zusätzlich die Helligkeit des Displays geregelt werden.

Zur Zielführung wird in vorteilhafter Weise im Display die Richtung in Form eine Pfeiles und der Abstand zum Zielpunkt als Zahlenwert dargestellt. Für den Benutzer ist die Maßeinheit beispielsweise in Meter oder Yards individuell einstellbar. Bewegt sich der Benutzer nun anhand der dargestellten Daten auf den Zielpunkt zu, wird die Anzeige des Zielpfeiles und der Zielentfernung auf dem Display laufend anhand aktueller Orts- und Kompassdaten des Beobachtungsgeräts aktualisiert angezeigt. Von besonders großem Anwendernutzen ist die gleichzeitige Anzeige der ursprünglichen Zielentfernung zum Zielpunkt und die aktuelle Restentfernung zum Zielpunkt als Zahlenwerte. Eine grafische Darstellung, z.B. anhand einer Balkenanzeige, die bei Zielannäherung bis auf Null abnimmt ist besonders einfach vom Benutzer auswertbar. Besonders zweckmäßig ist die Anzeige der aktuell eingeschlagenen (möglicherweise falschen) Bewegungsrichtung durch einen klein dargestellten Pfeil als Vergleichsanzeige und eine gleichzeitige deutlich größere, farblich anders gestaltete oder größere Pfeildarstellung, die der Richtung auf den Zielpunkt entspricht.

Zur weiteren Erhöhung des Benutzerwertes ist der Mikroprozessor des optischen Beobachtungsgerätes zur Berechnung ballistischer Korrekturdaten eingerichtet. Der Neigungssensor und ebenso weitere für die Berechnung notwendige, bzw. ergänzende Sensoren, wie z.B. Luftdruck-, Luftfeuchtigkeits- und Temperatursensor sind in das Gehäuse integriert. Die jeweiligen Messdaten, insbesondere die Entfernung und der Neigungswinkel werden zur Berechnung ballistischer Korrekturdaten genutzt. Die Anzeige eines Korrekturwertes erfolgt wahlweise zusätzlich intern auf dem Display des Zielerfassungsmoduls oder außen am Display des Zielführungsmoduls. Ergänzt wird diese Funktion durch eine einfache Bereitstellung ballistischer Kenndaten, wie Geschosseigenschaften, Flugbahn und Geschossgeschwindigkeit, die individuell vom Benutzer beispielsweise auf einer digitalen Speicherkarte, z.B. Micro-SD gespeichert dem Mikroprozessor zur Verfügung stehen. Die Speicherkarte wird dazu in einen wasserdicht verschließbaren Schacht im Beobachtungsgerät eingeschoben.

In besonders einfacher Weise können solche Daten und weitere individuelle Einstellungen am Beobachtungsgerät auch über eine drahtlose Kommunikation, wie Bluetooth, Wireless LAN oder ähnlichem vorgenommen werden. In dieser Ausführungsform wird das Beobachtungsgerät per Funk mit einem PC, Laptop, PDA, Smartphone oder dergleichen verbunden. Über eine solche drahtlose Kommunikationsschnittstelle können auch ballistische Korrekturdaten an ein ebenfalls zur drahtlosen Kommunikation eingerichtetes Zielfernrohr übertragen werden. Alternativ können Zielführungs- und Positionsdaten auf die oben erwähnten externen Geräte übertragen werden.

Insbesondere durch die Bereitstellung einer Zielführungsfunktion wird mit einem erfindungsgemäßen Beobachtungsgerät im jagdlichen Bereich in besonders vorteilhafter Weise das Auffinden des Wildes, bzw. die Position des Wildes im Moment der Schussabgabe (Anschuss genannt) ermöglicht. Oftmals befindet sich das Wild nämlich vor der Schussabgabe noch gut sichtbar z.B. in einem Feld an einer Position, die mit dem Beobachtungsgerät angemessen werden kann, während es nach der Erlegung von der Vegetation sprichwörtlich verschluckt wird. Auch wenn das Wild nach dem Schuss noch flüchtet sind die Ortskoordinaten des Anschusses von großer Bedeutung, da eine Suche oder Kontrolle von dieser Position unter Ausnutzung von Spuren ausgeht und das Auffinden dieser Position in der jagdlichen Praxis von hoher Bedeutung ist. Insbesondere in der Dunkelheit oder bei Dämmerung ist das Auffinden des Anschusses erschwert und wird durch das beleuchtete Display des Zielführungsmoduls ermöglicht. Der Jäger wird durch die automatische Abschaltung der Beleuchtung des externen Displays bei der Anmessung oder anschießender Abgabe des Schusses nicht durch ein unbeabsichtigt leuchtendes externes Display geblendet.

Das erfindungsgemäße Beobachtungsgerät ist vorteilhaft auch in der Forstwirtschaft beispielsweise zum Vermessen von Flächen verwendbar. Es können Flächen ausgemessen werden ohne diese ablaufen zu müssen, indem lediglich die Eckpunkte der Fläche angemessen und die Ortskoordinaten ermittelt werden. Die ermittelten Daten können auf der auswechselbaren Speicherkarte dauerhaft gespeichert werden und stehen für anschließende weitere Auswertungen und Berechnungen zur Verfügung.

Die Verwendung eines erfindungsgemäßen Beobachtungsgeräts ist selbstverständlich nicht auf den jagdlichen Bereich beschränkt, vielmehr sind auch Anwendungen in der Schifffahrt oder Flugraumüberwachung möglich, bei denen die Position von Hindernissen, Markierungen, anderen Schiffen oder beispielsweise Flugobjekten von Interesse sind.

Es versteht sich, dass die vorstehend genannten und nachfolgend anhand der Zeichnung noch zu erläuternden Merkmale den Schutzbereich nicht einengen, sondern vielmehr lediglich ein Beispiel der Erfindung zeigen.

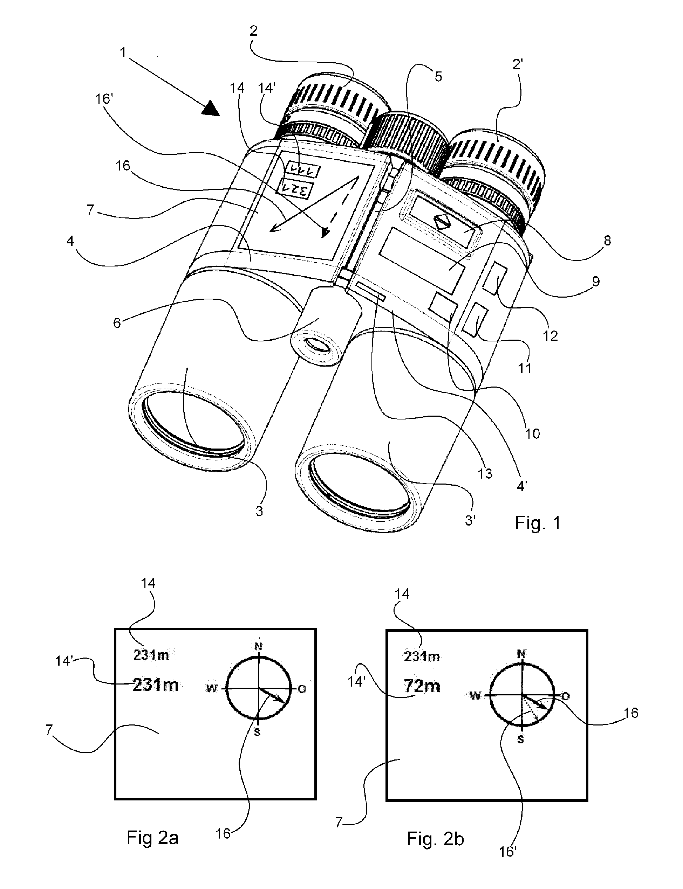

Ein Ausführungsbeispiel der Erfindung ist in der Zeichnung schematisch dargestellt und wird nachfolgend anhand von Figur 1 näher erläutert.

Dabei zeigt Figur 1 eine Gesamtdarstellung eines erfindungsgemäßen Beobachtungsgeräts am Beispiel eines binokularen Fernglases.

Figur 2a zeigt ein Display des Zielführungsmoduls bei Beginn der Zielführung und Figur 2b während eines Zielführungsvorgangs.

Figur 3 zeigt eine Gesamtdarstellung am Beispiel eines monokularen Laserrangefinder (LRF).

Das Fernglas 1 weist Okulare 2, 2', Objektive 3, 3', eine rechte Gehäusehälfte 4 und eine linke Gehäusehälfte 4' auf. Die Gehäusehälften 4, 4' sind über eine Gelenkachse 5 zur Augenweiteneinstellung verbunden. Zwischen den Objektiven 3, 3' ist in Verlängerung der Gelenkachse 5 ein Lasersender 6 angeordnet. Als Bestandteil eines nicht weiter dargestellten Zielführungsmoduls ist außen auf der Gehäusehälfte 4 ein Display 7 vorgesehen. In der Gehäusehälfte 4' ist in der Nähe des Okulars 2' griffgünstig ein erster Schalter 8 und von diesem beabstandet ein zweiter Schalter 9 angeordnet. Ein Neigungssensor 10, Kompasssensor 11 und GPS-Empfänger 12 sind schematisch dargestellt. Im Bereich zwischen Objektiv 3' und Lasersender 6 ist ein Schacht 13 zur Aufnahme einer Speicherkarte vorgesehen.

Figur 2a zeigt schematisch ein Display 7 zu Beginn einer Zielführung. In dem in der Darstellung oberen linken Bereich ist dazu eine Zahlenanzeige 14 mit einer Anfangsdistanz zu einem angemessenen Zielpunkt angeordnet und darunter eine Zahlenanzeige 14' zur Darstellung einer Restentfernung bei Zielführungsfunktion dargestellt. Zu Beginn einer Zielführung weisen beide Zahlenanzeigen 14 und 14' denselben Zahlenwert auf. Auf dem Display 7 ist auch eine Kompassanzeige 15 mit einem Ziel-Richtungspfeil 16 dargestellt.

In Figur 2b ist das Display 7 während eines Zielführungsvorgangs dargestellt. Die Zahlenanzeige 14 zeigt weiterhin die ursprüngliche Zielentfernung an und die darunter dargestellte Zahlenanzeige 14' die Rest-Entfernung zum Zielort. In der Kompassanzeige 15 zeigt der Zielrichtungspfeil 16 die korrekte Richtung zum Ziel und ein weiterer Pfeil 16' die aktuell eingeschlagene (hier falsche) Richtung zum Zielpunkt an.

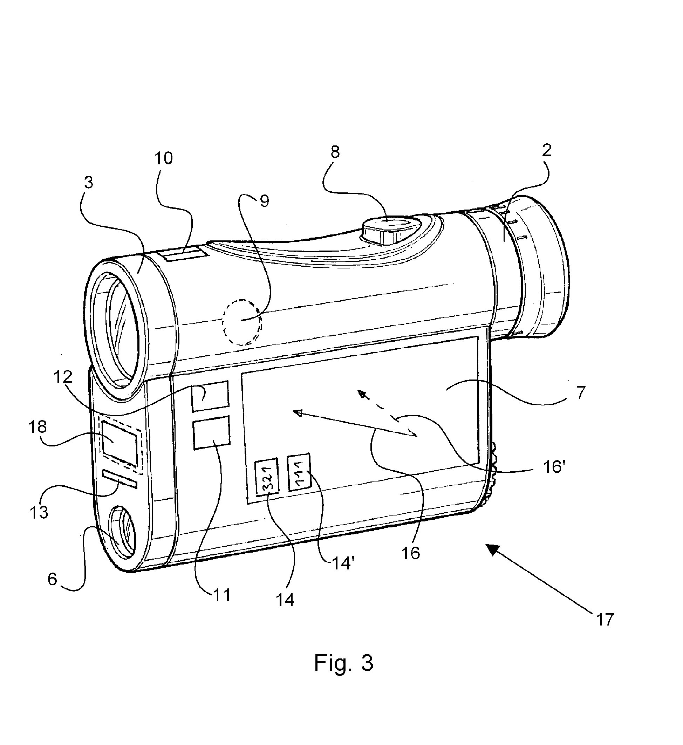

Der in Figur 3 dargestellte monokulare Laserrangefinder (LRF) 17 wird zu Zielortungszwecken senkrecht gehalten und mit dem Okular 2 am Auge des Benutzers angelegt. Die Entfernungsmessung zum Zielpunkt erfolgt mit Hilfe eines vom Lasersender 6 ausgesandten und vom Zielpunkt in das Objektiv 3 oder einen in Objektivnähe angeordneten separaten Laserempfängers 18. In den LRF 17 integriert sind im oberen Gehäusebereich ein schematisch dargestellter Neigungssensor 10. Ein Kompass-Sensor 11 und ein GPS-Empfänger 12 sind schematisch an der länglichen Seite des LRF 17 dargestellt. Die Betätigung der Funktionen erfolgt über einen oben am Gehäuse angeordneten ersten Schalter 8 und einen seitlichen zweiten Schalter 9. Ein Display 7 ist im seitlichen Bereich des LRF 17 angeordnet. Im Falle der Zielführungsfunktion wird das Gehäuse um 90° gedreht, so dass das Display 7 durch den Benutzer von oben einsehbar ist. Im Display 7 dient z.B. zur Darstellung der korrekten Richtung ein Zielrichtungspfeil 16. Bewegt sich den Benutzer im Zielführungsmodus auf den Zielpunkt zu, zeigt ein zusätzlicher Richtungspfeil 16' die aktuell eingeschlagene Richtung an. Im Display 7 können weitere Informationen dargestellt werden, wie z.B. mit Zahlenanzeige 14 die ursprüngliche Zielentfernung und mit Zahlenanzeige 14' die noch verbleibende Entfernung zum Zielpunkt.

### Bezugszeichenliste

- 1: Fernglas
- 2, 2': Okular
- 3, 3': Objektiv
- 4,4': Gehäusehälften
- 5: Gelenkachse
- 6: Lasersender
- 7: Display
- 8: Erster Schalter
- 9: zweiter Schalter
- 10: Neigungssensor
- 11: Kompass-Sensor
- 12: GPS-Empfänger
- 13: Schacht für Speicherkarte
- 14, 14': Zahlenanzeige
- 15: Kompassanzeige
- 16, 16': Richtungspfeil
- 17: Monokularer LRF
- 18: Laserempfänger

## Patentansprüche

1. Optisches Beobachtungsgerät zur Zielerfassung und Zielführung mit zumindest einem dem zu beobachtenden Objekt zuzuwendenden Objektiv und zumindest einem dem Auge des Betrachters zuzuwendenden Okular in einem Gehäuse, wobei das Gehäuse zumindest ein Bildumkehrsystem, Mittel zur Entfernungsmessung, zur Orts-/ Positionsbestimmung, zur Bestimmung der Himmelsrichtung und zur Anzeige von Daten aufweist, **dadurch gekennzeichnet, dass** das Beobachtungsgerät
a) ein integriertes Zielerfassungsmodul mit optoelektronischem Entfernungsmesser, einem durch das Okular beobachtbaren Display zur Darstellung einer Zielmarke und einer Zielentfernung, einer GPS-Positionsbestimmung, einer elektronischen Kompass-Richtungsbestimmung und einer Microcomputereinheit zur Berechnung und Speicherung von Entfernung und Ortskoordinaten eines anvisierten Zielpunktes,
b) ein integriertes Zielführungsmodul mit außen am Gehäuse angeordnetem Display zur Darstellung eines aus den aktuell ermittelten GPS-Positionskoordinaten des Beobachtungsgerätes, elektronischer Kompassdaten und den gespeicherten Ortskoordinaten des Zielpunktes berechneten Zielrichtungsvektors und einer resultierenden aktuellen Zielentfernung, und
c) am Gehäuse angeordnete Betätigungsorgane zur Aktivierung von Funktionen des Zielerfassungs- und Zielführungsmoduls
aufweist.

2. Optisches Beobachtungsgerät nach Anspruch 1, **dadurch gekennzeichnet, dass** als Betätigungsorgane mindestens ein außen am Gehäuse angeordneter Druckschalter und/oder mindestens ein integrierter, im Okularbereich angeordneter Näherungssensor vorgesehen sind, wobei die Microcomputereinheit mittels erster Schalterbetätigung aktivierbar ist und durch wiederholte Betätigung des Schalterorgans oder eines weiteren Bedienelementes und/oder unverändertem Zustand des Näherungssensors im Zielerfassungsmodul die Berechnung und Speicherung der GPS-Positionskoordinaten des Beobachtungsgerätes und der Entfernung und Ortskoordinaten des Zielpunktes aktivierbar ist, während das Zielführungsmodul und dessen Display deaktiviert sind.

3. Optisches Beobachtungsgerät nach Anspruch 2, **dadurch gekennzeichnet, dass** das Zielführungsmodul und dessen Display durch ein weiteres außen am Gehäuse angeordnetes Bedienelement und/oder Veränderung des Zustandes des Näherungssensors aktivierbar sind.

4. Optisches Beobachtungsgerät nach einem der Ansprüche 1 bis 3, **dadurch gekennzeichnet, dass** ein Neigungssensor und weitere zur Berechnung ballistischer Korrekturdaten notwendige Sensoren, wie Luftdruck, Luftfeuchtigkeit und Temperatur in das Gehäuse integriert sind, deren Messdaten zur Berechnung und Anzeige, wahlweise auf dem Display des Zielerfassungsmoduls und/oder dem Display des Zielführungsmodus darstellbar sind.

5. Optisches Beobachtungsgerät nach Anspruch 4, **dadurch gekennzeichnet, dass** der Microcomputereinheit ein wasserdicht verschließbarer Schacht zur Aufnahme einer digitalen Speicherkarte mit Ballistikkorrekturwerten zugeordnet ist und/oder drahtlose Kommunikationsmittel, wie Bluetooth oder Wireless LAN, zum Datenaustausch mit externen Geräten, wie Laptop oder Smartphone, an die Microcomputereinheit zur Speicherung und/oder Übertragung von Ballistikdaten, Standortinformationen und Zieldaten angeschlossen sind.

6. Verfahren zur Zielerfassung und Zielführung mit einem optischen Beobachtungsgerät nach einem der vorhergehenden Ansprüche, wobei:
- ein Zielerfassungsmodul durch eine erste Schalterbetätigung aktiviert und mit erneuter Schalterbetätigung ein anvisierter Zielpunkt mit einem Laserentfernungsmesser angemessen und dessen Entfernung ermittelt wird,
- die Ortskoordinaten des Zielpunktes anhand von mit einem GPS-Modul ermittelten aktuellen Positionsdaten, der Zielentfernung und einer mit einem elektronischen Kompass ermittelten Richtung berechnet und zusammen mit der Zielentfernung in einem Speichermodul gespeichert werden,
- zur Zielführung das Beobachtungsgerät vom Auge entfernt wird, worauf das Display des Zielführungsmoduls aktiviert und die Richtung zum zuvor erfassten Zielpunkt dargestellt und laufend anhand aktueller Orts- und Kompassdaten des Beobachtungsgerätes aktualisiert angezeigt wird.

7. Verfahren zur Zielerfassung und Zielführung nach Anspruch 6, **dadurch gekennzeichnet, dass** auf dem Display des Zielführungsmoduls die ursprüngliche Zielentfernung zum Zielpunkt und die aktuelle Restentfernung zum Zielpunkt als Zahlenwerte und/oder grafisch angezeigt werden.

8. Verfahren zur Zielerfassung und Zielführung nach Anspruch 6 oder 7, **dadurch gekennzeichnet, dass** die aktuell eingeschlagene Bewegungsrichtung und die Richtung zum Zielpunkt grafisch als Pfeildarstellungen angezeigt werden.
